# EUROPEAN PATENT SPECIFICATION

(11) **EP 3 155 893 B1**
(45) Date of publication and mention of the grant of the patent: **24.04.2019**
(21) Application number: 15806228.1
(22) Date of filing: 14.05.2015
(51) Int. Cl.: A01G 9/18, A01G 7/02, A01G 9/24

(54) **CARBON DIOXIDE APPLICATION SYSTEM AND CARBON DIOXIDE APPLICATION METHOD**
KOHLENDIOXIDANWENDUNGSSYSTEM UND KOHLENDIOXIDANWENDUNGSVERFAHREN
SYSTÈME D'APPLICATION DE DIOXYDE DE CARBONE ET PROCÉDÉ D'APPLICATION DE DIOXYDE DE CARBONE

(30) Priority: 11.06.2014 JP 2014120776
(43) Date of publication of application: 19.04.2017
(73) Proprietor: Futaba Industrial Co., Ltd., Okazaki-shi, Aichi 444-8558 (JP)
(72) Inventor: SAITO, Takashi, Okazaki-shi, Aichi 444-8558 (JP); YUMIDATE, Masaki, Okazaki-shi, Aichi 444-8558 (JP)
(74) Representative: Seemann & Partner Patentanwälte mbB
(86) International application number: PCT/JP2015/063916
(87) International publication number: WO 2015/190214

(56) References cited:
- JP-A- 2007 236 235
- JP-A- 2014 018 196
- JP-B1- 5 198 682
- JP-B2- 3 511 684

## Description

### TECHNICAL FIELD

The present invention is related to a carbon dioxide application system and a method for carbon dioxide application so as to supply carbon dioxide to gardening plants in agricultural greenhouses.

### BACKGROUND ART

Carbon dioxide application systems that supply carbon dioxide into agricultural greenhouses to facilitate growth of gardening plants have become widely available. The carbon dioxide application system activates photosynthesis by supplying (applying) carbon dioxide to gardening plants in an attempt to improve the yield and the quality of gardening plants.

To inhibit the loss of carbon dioxide due to carbon dioxide flowing out of agricultural greenhouses, and to efficiently use carbon dioxide to promote the growth of gardening plants, agricultural greenhouses preferably have high air tightness. However, due to the high air tightness, when the temperature in an agricultural greenhouse excessively increases, so-called high temperature injury may be caused, in which, for example, gardening plants do not bear enough fruits, or dries out.

To deal with such a problem, Patent Document 1 to be described below discloses a carbon dioxide application system that supplies carbon dioxide (carbonic acid gas) to gardening plants in an agricultural greenhouse (greenhouse) and to ventilate the inside of the agricultural greenhouse. The carbon dioxide application system comprises a temperature sensor (room temperature sensor) that measures the temperature in an agricultural greenhouse, and a concentration sensor (carbonic acid gas concentration sensor) that measures the concentration of carbon dioxide in the agricultural greenhouse, and, based on these measurements, inhibits the loss of carbon dioxide to create an environment that is suitable for the growth of gardening plants in the agricultural greenhouse.

Specifically, in the carbon dioxide application system of Patent Document 1 to be described below is configured such that the amount of carbon dioxide to be supplied from the carbon dioxide supply device (carbonic acid gas generation device) is adjusted so that the concentration of carbon dioxide in an agricultural greenhouse reaches the standard concentration. Moreover, the carbon dioxide application system is configured to control a ventilation window and a ventilation fan to ventilate the inside of an agricultural greenhouse so that the temperature in the agricultural greenhouse reaches the standard temperature. To inhibit carbon dioxide from being discharged during ventilation in an agricultural greenhouse and being wasted, the carbon dioxide application system makes a correction to decrease the standard concentration of carbon dioxide during ventilation so that the concentration of carbon dioxide in the agricultural greenhouse decreases.

### PRIOR ART DOCUMENT

### PATENT DOCUMENT

Japanese Unexamined Patent Application Publication No.. JP 2014 018196 A.

### SUMMARY OF THE INVENTION

### PROBLEMS TO BE SOLVED BY THE INVENTION

However, in the carbon dioxide application system, disclosed in the aforementioned priot art, in which a carbon dioxide concentration sensor is used, various problems still remain in practical aspects. In other words, generally available concentration sensors do not necessarily have suitable accuracy and responsiveness for a use in a large facility such as an agricultural greenhouse; even a slight draft that flows into an agricultural greenhouse, for example, becomes a large disturbance and changes measurements. Moreover, in a large agricultural greenhouse, the concentration of carbon dioxide may be significantly uneven depending on the areas. Accordingly, the problem lies in the difficulty to control the environment of the entire area in an agricultural greenhouse so as to be suitable for the growth of gardening plants based on the measurements of the concentration sensor, while the installing number of the concentration sensors, which are expensive instruments, should be limited.

The present invention is made to solve such problem, and the purpose is to provide a carbon dioxide application system and method for carbon dioxide application that can create an environment, in agricultural greenhouses, that is suitable for the growth promotion of gardening plants without using carbon dioxide concentration sensors, and that can inhibit the loss of carbon dioxide.

### MEANS FOR SOLVING THE PROBLEMS

To solve the above-described problem, a carbon dioxide application system according to the present invention supplies carbon dioxide to gardening plants in an agricultural greenhouse, the system comprising: a carbon dioxide supply device that supplies carbon dioxide; a tube that is formed to extend from the carbon dioxide supply device to a vicinity of a foot of gardening plants and supplies carbon dioxide supplied from the carbon dioxide supply device from an ejection outlet formed in a portion in the vicinity of the foot of gardening plants; a ventilation device that ventilates an inside of the agricultural greenhouse; and a control device that controls the carbon dioxide supply device and the ventilation device, and, when temperature in the agricultural greenhouse reaches a specified value or more, drives the ventilation device, wherein the control device alternately repeats execution of: supplying in which the control device drives the carbon dioxide supply device for a first-period specified in advance during which the ventilation device is stopped; and spreading in which, after the supplying being executed, the control device stops the carbon dioxide supply device and the ventilation device for a second-period specified in advance, and wherein, when the temperature in the agricultural greenhouse reaches a specified value or more while one of the supplying and the spreading being executed, the control device inhibits the ventilation device from subsequently driving until end of execution of the spreading.

As described above, with the carbon dioxide application system that supplies carbon dioxide from the ejection outlet in the vicinity of the foot of gardening plants, the supplied carbon dioxide is outwardly spread from the foot of the gardening plant. Accordingly, carbon dioxide can be reliably supplied to leaves of the gardening plants and absorbed therein so that photosynthesis can be activated and the growth of the gardening plants can be facilitated. However, a portion of carbon dioxide that has not been absorbed into the leaves of the gardening plants passes between the leaves and further outwardly spreads, which does not contribute to the growth promotion of the gardening plant.

Thus, the carbon dioxide application system according to the present invention is configured to alternately and repeatedly perform the supplying and the spreading. In the supplying, driving the carbon dioxide supply device for the first-period specified in advance enables to supply carbon dioxide to the foot of gardening plants. During this period, since the ventilation device is stopped, supplied carbon dioxide is not discharged out of the agricultural greenhouse. In the spreading performed following the supplying, the carbon dioxide supply device and the ventilation device are stopped for the second-period specified in advance so that the ejection of additional carbon dioxide from the ejection outlet and ventilation are not performed. Accordingly, carbon dioxide supplied to the foot of gardening plants in the supplying is spread for the second-period and supplied to the leaves of the gardening plant. Accordingly, in the carbon dioxide application system according to the present invention, the first-period and the second-period are adjusted so as to adjust the concentration of carbon dioxide to be an appropriate value, which is sufficient but not excessively high, in the position of the leaves of a gardening plant, and to limit the amount of carbon dioxide outwardly spread without being absorbed into the leaves so that the growth of gardening plants can be efficiently facilitated.

As described above, carbon dioxide application system according to the present invention supplies and spreads carbon dioxide for specified period (supplying: the first-period, spreading: the second-period) so that, without using the concentration sensor for carbon dioxide, the concentration of carbon dioxide at the position of the leaves of gardening plants is adjusted so as to be an appropriate value. Accordingly, while one of the supplying and the spreading is being executed, if the temperature in the agricultural greenhouse reaches a specified value or more and, based thereupon, if ventilation inside of an agricultural greenhouse is immediately initiated, carbon dioxide is discharged without the concentration at the position of the leaves being an appropriate value, and supplied carbon dioxide is not sufficiently absorbed and wasted.

Accordingly, the carbon dioxide application system according to the present invention is furthermore configured such that, when the temperature in the agricultural greenhouse reaches a specified value or more while one of the supplying and the spreading is being executed, the ventilation device is inhibited from being subsequently driven until end of execution of the spreading. This enables not to waste carbon dioxide that has been supplied until the temperature in the agricultural greenhouse reaches the specified value and to facilitate the growth of gardening plants.

Moreover, to solve the above-described problem, the method for carbon dioxide application according to the present invention is a method in which carbon dioxide being supplied to gardening plants in an agricultural greenhouse, the method comprising: supplying in which carbon dioxide is supplied from an ejection outlet to a vicinity of a foot of gardening plants for a first-period specified in advance, during which an inside of an agricultural greenhouse is not ventilated; and spreading in which, after the supplying being executed, supplying of carbon dioxide and ventilation in the agricultural greenhouse are not performed for a second-period specified in advance, the supplying and the spreading being alternately performed, wherein while one of the supplying and the spreading is being executed, if the temperature in the agricultural greenhouse reaches a specified value or more, the inside of the agricultural greenhouse is not subsequently ventilated until end of execution of the spreading.

With the method for carbon dioxide application according to the present invention, adjustment of the first-period and the second-period enables to adjust the concentration of carbon dioxide at the position of the leaves of the gardening plant to reach an appropriate value, which is sufficient but not excessively high, and to facilitate the growth of gardening plants while the amount of carbon dioxide, being unabsorbed into the leaves but outwardly spreading, is limited.

Moreover, while one of the supplying and the spreading being executed, if the temperature in the agricultural greenhouse reaches a specified value or more, ventilation is not subsequently executed until end of execution of the spreading. This prevents carbon dioxide that has supplied before the temperature in the agricultural greenhouse reaches the specified value from being discharged and wasted due to ventilation, and enables to facilitate the growth of gardening plants.

### EFFECTS OF THE INVENTION

According to the present invention, a carbon dioxide application system and a method for carbon dioxide application can be provided, in which a suitable environment for growth promotion of gardening plants can be created in agricultural greenhouses without a carbon dioxide concentration sensor, and the loss of carbon dioxide can be limited.

### BRIEF DESCRIPTION OF THE DRAWINGS

FIG. 1 is a schematic diagram showing a carbon dioxide application system according to an embodiment of the present invention;
FIG. 2 is a sectional view of a section II-II in FIG. 1;
FIG. 3 is a time chart illustrating control by a control device in a carbon dioxide application test;
FIG. 4 is a graph showing fluctuations in the concentration of carbon dioxide in a carbon dioxide application test;
FIG. 5 is a time chart illustrating control by the control device and fluctuations in the temperature in an agricultural greenhouse; and
FIG. 6 is a flowchart showing a process of supplying carbon dioxide.

### MODE FOR CARRYING OUT THE INVENTION

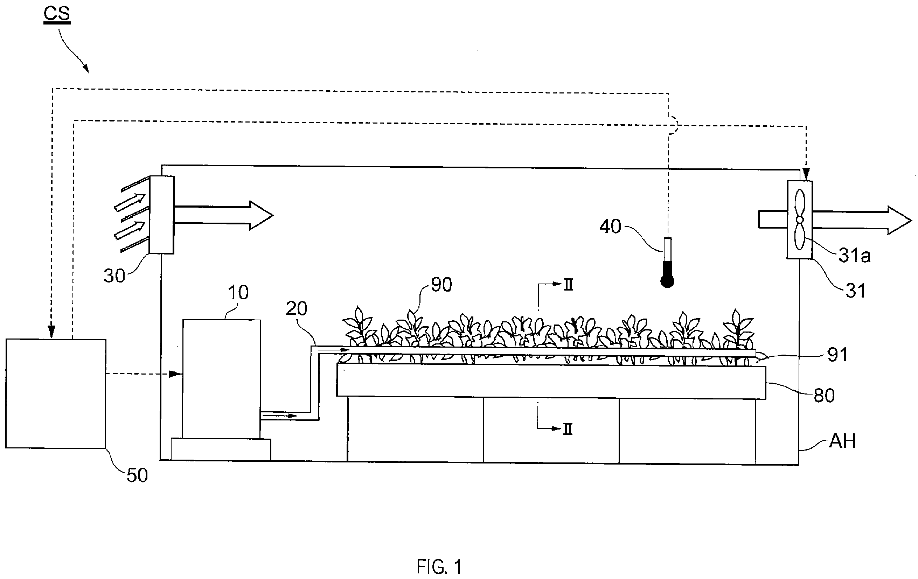

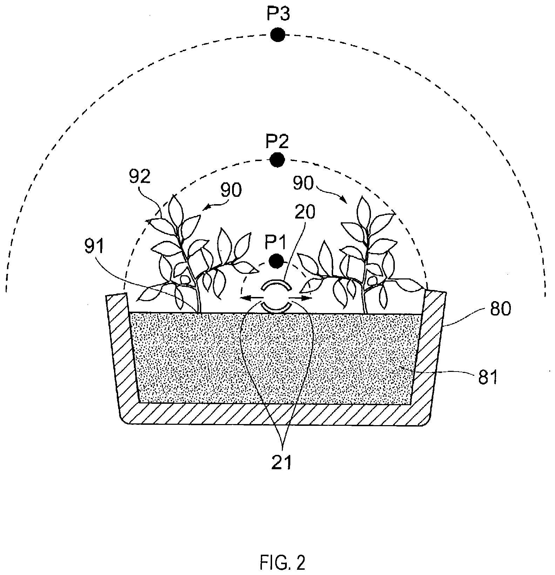

The following describes, with reference to the attached drawings, embodiments according to the present invention. Referring first to FIG. 1 and FIG. 2, the overview of a carbon dioxide application system CS of embodiments according to the present invention is described. FIG. 1 is a schematic diagram showing the carbon dioxide application system CS of an embodiment according to the present invention. FIG. 2 is a sectional view of a section II-II in FIG. 1.

As shown in FIG. 1, the carbon dioxide application system CS is applied to an agricultural greenhouse AH and comprises a carbon dioxide supply device 10, a tube 20, an outside air introducing outlet 30, a ventilation fan 31, a temperature sensor 40, and a control device 50.

The agricultural greenhouse AH (to be referred also to as "house AH" hereinafter) is a greenhouse that accommodates strawberry plants 90. As shown in FIG. 2, the strawberry plants 90 take root under soil 81 filled in a planter 80 and cultivated therein. For the house AH, construction materials such as glasses and films having good translucency and weather resistance are used, and the space inside the house AH has high airtightness. Accordingly, inside the house AH is warmed by sunlight penetrating the house AH which increases the temperature in the house AH, and photosynthesis of the strawberry plants 90 is facilitated.

The carbon dioxide supply device 10 is disposed in the house AH and produces gas containing carbon dioxide with high concentration to supply the gas into the house AH (the supplied gas is also referred to as "carbon dioxide" hereinafter). The carbon dioxide supply device 10 produces carbon dioxide by burning heavy oil or kerosene at the nighttime. The combustion heat produced at that time is used to heat the air inside the house AH so that the growth of the strawberry plants 90 is hindered due to the temperature in the house AH being too much decreased during the nighttime. The carbon dioxide supply device 10 stores, inside thereof, carbon dioxide produced at the nighttime, and supplies the carbon dioxide into the house AH in the daytime when the photosynthesis of the strawberry plants 90 becomes active.

The tube 20 is a flexible member formed in a manner so as to be extended from the carbon dioxide supply device 10 to the vicinity of the foot 91 of the strawberry plants 90. As shown in FIG. 2, the tube 20 is laid on the surface of the soil 81 filled in the planter 80 between adjacent strawberry plants 90, 90. The tube 20 is connected, at an end portion thereof, to the carbon dioxide supply device 10 so as to run the carbon dioxide supplied from the carbon dioxide supply device 10 through the inside of the tube 20. The tube 20 is provided with an ejection outlet 21 formed in a portion of the tube 20 in the vicinity of the foot of each of the strawberry plants 90.

The ventilation fan 31 is a ventilation device disposed in a relatively high position on the wall surface of the house AH and has a fan 31a rotated by receiving supply of electric power. By the rotation of this fan 31a, inside the house AH is ventilated in which air is brought in through the air introducing outlet 30 from outside the house AH and the air inside the house AH is discharged outside.

The temperature sensor 40 is an electric thermometer that is disposed inside the house AH and measures the temperature in the house AH. The temperature sensor 40 converts measured temperature in the house AH into electric signals and externally transmits the signals. Moreover, the temperature sensor 40 is disposed in the periphery of the strawberry plants 90 to measure the temperature of the atmosphere where the strawberry plants 90 are positioned.

The control device 50 is a control device that integrally and entirely controls the carbon dioxide application system CS. The control device 50 is electrically connected to the carbon dioxide supply device 10 and the ventilation fan 31 and transmits electric signals to the carbon dioxide supply device 10 and the ventilation fan 31 respectively so as to control the carbon dioxide supply device 10 and the ventilation fan 31. Moreover, the control device 50 is also electrically connected to the temperature sensor 40, receives electric signals that corresponds to the temperature in the house AH from the temperature sensor 40, and executes control based on the temperature, which will be described later.

In the carbon dioxide application system CS configured as above, when, in the daytime, the control device 50 transmits electric signals to the carbon dioxide supply device 10 to drive the carbon dioxide supply device 10, carbon dioxide stored in the carbon dioxide supply device 10 during the nighttime is supplied. This carbon dioxide flows inside the tube 20 to be introduced toward the strawberry plants 90, and ejected from the ejection outlet 21 to the vicinity of the foot 91 of strawberries plants 90.

Moreover, the carbon dioxide application system CS ventilates the inside of the house AH to prevent excessive increase of the temperature in the house AH. Specifically, when the temperature in the house AH measured by the temperature sensor 40 reaches a specified value (for example, 30 °C) or higher, the control device 50 transmits an electric signal to the ventilation fan 31 to drive the ventilation fan 31, and ventilates the inside of the house AH to decrease the temperature.

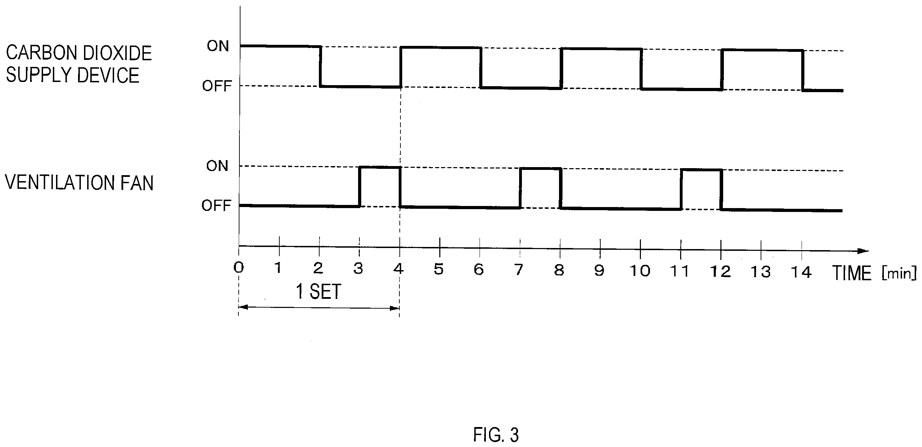

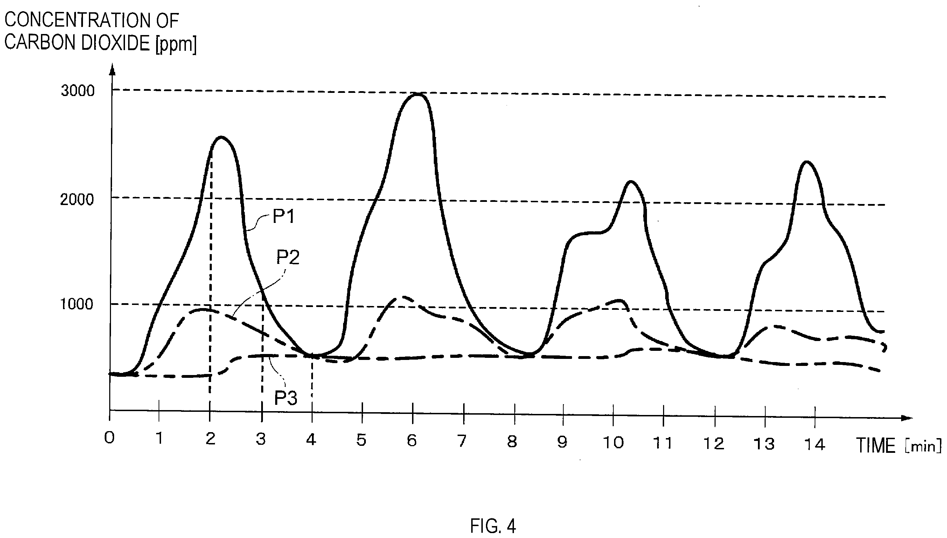

With regard to the carbon dioxide application system CS configured as above, carbon dioxide application test was run to confirm a supply method of carbon dioxide that is suitable for the strawberry plants 90. With reference to FIG. 3 and FIG. 4, the content of the carbon dioxide application test and the result will be described below. FIG. 3 is a time chart illustrating the control executed by the control device 50 in the carbon dioxide application test. FIG. 4 is a graph showing the fluctuations in the concentration of carbon dioxide in the carbon dioxide application test.

In the test, the control device 50 controlled the carbon dioxide supply device 10 to intermittently drive so that carbon dioxide is intermittently ejected and supplied from the ejection outlet 21 to the foot 91 of the strawberry plants 90. Moreover, during a portion of a period when the carbon dioxide supply device 10 is stopped, ventilation fan 31 is driven to ventilate the inside of the house AH.

The control by the control device 50 will be described in detail. As shown in FIG. 3, the control device 50 first drives (ON) the carbon dioxide supply device 10 for two minutes (0 min to 2 min) so that carbon dioxide is ejected from the ejection outlet 21, during which the ventilation fan 31 is stopped (OFF). Subsequently, the control device 50 stops the carbon dioxide supply device 10 and the ventilation fan 31 for one minute (2 min to 3 min). Subsequently, while the carbon dioxide supply device 10 is stopped, the control device 50 drives the ventilation fan 31 for one minute (3 min to 4 min) to ventilate the inside of the house AH. Such control over four minutes (0 min to 4 min) is in one set, and repeated to supply carbon dioxide to the strawberry plants 90.

FIG. 4 shows the fluctuations in the concentration of carbon dioxide at a measuring point P1 in the vicinity of the foot 91 of the strawberry plants 90, at a measuring point P2 that corresponds to the position of leaves 92 of the strawberry plants 90, and at measuring point P3 that is external to the strawberry plants 90 (see FIG. 2 for all P1 to P3). In FIG. 4, the fluctuations in the concentration of carbon dioxide at the measuring point P1 is shown with a solid line, while the fluctuations in the concentration of carbon dioxide at the measuring point P2 is shown with a one-dot-dashed line. Moreover, fluctuations in the concentration of carbon dioxide at the measuring point P3 is shown with a two-dot-dashed line.

Referring to the fluctuations from the beginning of ejection of carbon dioxide from the ejection outlet 21 (0 min) to two minutes later (2 min), the concentration of carbon dioxide at the measuring point P1 suddenly increased. Carbon dioxide ejected in the vicinity of the foot 91 of the strawberry plants 90 outwardly spreads due to the concentration difference between at the foot 91 and in the exterior. Accordingly, a little while after the increase in the concentration of carbon dioxide at the measuring point P1, the concentration of carbon dioxide at the measuring point P2 also increased. On the other hand, a major fluctuation was not observed in the concentration of carbon dioxide at the measuring point P3. At the measuring point P2 which corresponds to the position of the leaves 92 of the strawberry plants 90, the concentration of carbon dioxide increased substantially to 1000 ppm which is aimed by the inventors of the present invention in order to facilitate the photosynthesis of the strawberry plants 90.

Two minutes after the initiation of the ejection of carbon dioxide from the ejection outlet 21 (2 min), when the ejection of carbon dioxide from the ejection outlet 21 was stopped, the concentration of carbon dioxide at the measuring point P1 rapidly decreased due to carbon dioxide that had been ejected further outwardly spreading. At this time, the concentration of carbon dioxide at the measuring point P2 also decreased. However, due to the spread carbon dioxide being supplied to the foot 91 at the measuring point P2, the inclination was gradual as compared with the inclination at the measuring point P1. Accordingly, during the period until one minute passed since the ejection of carbon dioxide from the ejection outlet 21 was stopped (3 min), the concentration of carbon dioxide at the measuring point P2 was maintained between 700 and 1000 ppm which was aimed by the inventors of the present invention in order to facilitate the photosynthesis of the strawberry plants 90.

Moreover, during this period (2 min to 3 min), since a portion of carbon dioxide furthermore outwardly spread between the leaves 92 of the strawberry plants 90, the concentration of carbon dioxide at the measuring point P3 indicated an increase. However, the amount of the increase was scarce. Consequently, carbon dioxide ejected from the ejection outlet 21 was seemingly effectively absorbed into the leaves 92 which activated the photosynthesis, and facilitated the growth of the strawberry plants 90.

One minute after the stop of the ejection of carbon dioxide from the ejection outlet 21 (3 min), while the ejection was being withheld, the ventilation fan 31 was driven to initiate ventilation in the house AH, every concentration of carbon dioxide at each of the measuring points P1 to P3 continuously decreased. Consequently, the concentration of carbon dioxide at the measuring point P2 one minute after the initiation of the ventilation (4 min) decreased substantially to 500 ppm which is below the aforementioned range aimed by the inventors of the present invention.

From then on (from 4 min), the control device 50 repeated the same control several times. The concentration of carbon dioxide at each of the measuring points P1 to P3 indicated substantially the same tendency.

Separately from the above-described tests, another test was run under a condition in which carbon dioxide was ejected from the ejection outlet 21 for a longer period of time (3 minutes) than two minutes. Under this condition, the concentration of carbon dioxide at the measuring point P2 significantly increased beyond 700 to 1000 ppm which was aimed by the inventors of the present invention, which in turn lead to a result where the concentration of carbon dioxide at the measuring point P3 increased. That is, the amount of carbon dioxide that exceeded the amount of carbon dioxide which the leaves 92 of the strawberry plants 90 could possibly absorb was seemingly supplied to the leaves 92, and the amount of carbon dioxide that did not contributed to the growth increased.

Moreover, another test was run under a condition in which carbon dioxide was ejected from the ejection outlet 21 for a shorter period of time (1 minute) than two minutes. Under this condition, the result was such that carbon dioxide at the measuring point P2 did not reach 700 to 1000 ppm which was aimed by the inventors of the present invention. That is, carbon dioxide with sufficient concentration could not seemingly be supplied to the leaves 92 of the strawberry plants 90, and the growth of the strawberry plants 90 was incompletely facilitated.

From the result of the present tests, in the growth promotion of the strawberry plants 90 by the carbon dioxide application system CS, the appropriate period for ejecting carbon dioxide from the ejection outlet 21 was found out to be for two minutes. Moreover, spreading carbon dioxide without ventilation while the ejection of carbon dioxide is withheld was speculated to enable the concentration of carbon dioxide in the position of leaves 92 where the supply of carbon dioxide is particularly necessary to be in the range of 700 to 1000 ppm.

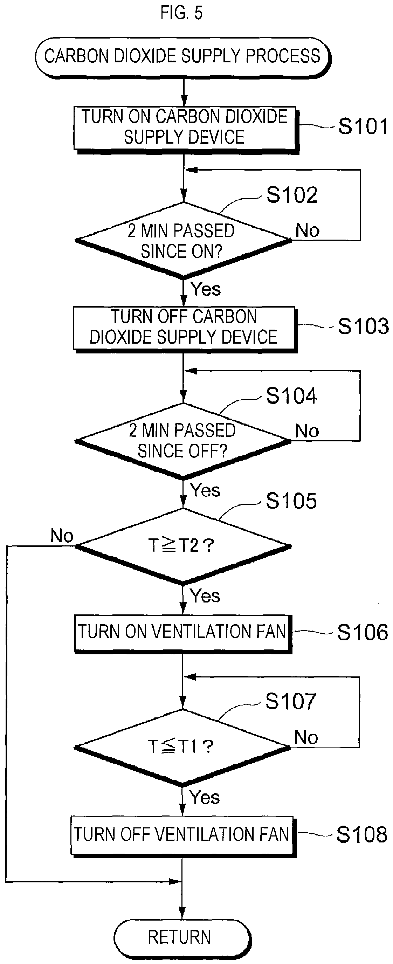

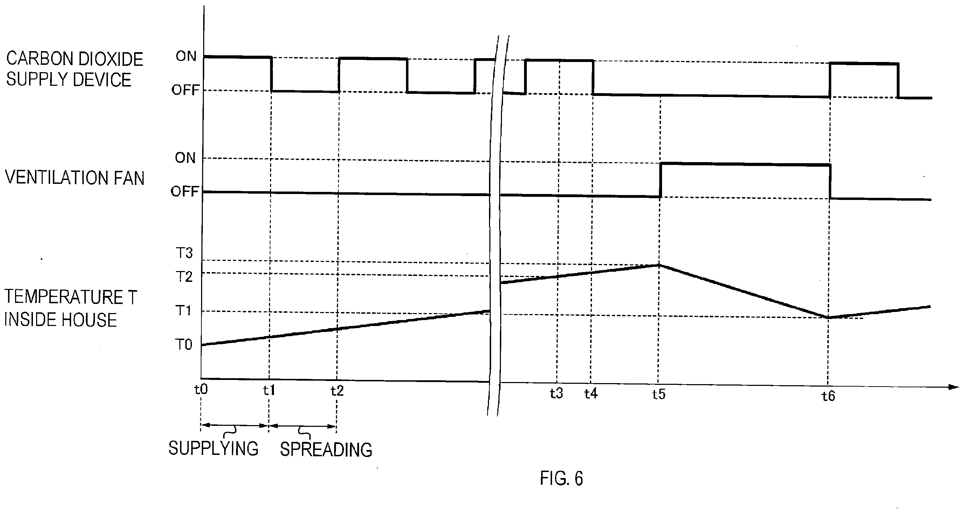

Based on the knowledge described above, an example of control executed by the control device 50 will be described with reference to FIG. 5 and FIG. 6. FIG. 5 is a flowchart illustrating the process of carbon dioxide supply. FIG. 6 is a time chart illustrating the control executed by the control device 50 and the fluctuations in the temperature in the house AH. In FIG. 6, an example is shown in which from time t0 to time t1 is referred to as a "supplying", and from time t1 to time t2 is referred to as a "spreading".

When the carbon dioxide application system CS is initiated based on the operation by, for example, an operator of the house AH, the control device 50 executes the control in accordance with the process of the carbon dioxide supply shown in FIG. 5. First, at time t0, the control device 50 drives (ON) the carbon dioxide supply device 10 (Step S101). Accordingly, carbon dioxide supplied from the carbon dioxide supply device 10 is ejected from the ejection outlet 21 to the vicinity of the foot 91 of the strawberry plants 90. At this time, the ventilation fan 31 is stopped (OFF).

Moreover, in association with the initiation of the carbon dioxide application system CS, the temperature sensor 40 starts sending electric signals toward the control device 50. Accordingly, the temperature T in the house AH measured by the temperature sensor 40 is continuously transmitted to the control device 50.

At time t1, when two minutes passes after the driving of the carbon dioxide supply device 10 (Step S102: Yes), the control device 50 stops (OFF) the carbon dioxide supply device 10 (Step S103). Accordingly, ejection of carbon dioxide from the ejection outlet 21 is stopped. By executing "the supplying" in this manner to supply carbon dioxide for two minutes, which is a prespecified period of time, the concentration of carbon dioxide at the position of leaves 92 of the strawberry plants 90 increases substantially to 1000 ppm which is aimed by the inventors of the present invention to facilitate the photosynthesis of the strawberry plants 90.

At time t1, when the carbon dioxide supply device 10 is stopped (OFF), from then on, additional carbon dioxide is not ejected from the ejection outlet 21, and carbon dioxide that has already been ejected further outwardly spreads. Accordingly, although the concentration of carbon dioxide at the position of leaves 92 of the strawberry plants 90 decreases, since the inside of the house AH is not ventilated, the inclination becomes relatively gradual. Therefore, highly concentrated carbon dioxide is supplied to the leaves 92 for a long period of time and absorbed so as to allow activation of the photosynthesis of the strawberry plants 90.

At time t2, when two minutes passes after the carbon dioxide supply device 10 being stopped (Step S104: Yes), the control device 50 determines whether the temperature in the house AH is at a threshold T2 or more (Step S105). When the temperature in the house AH is less than T2 (Step S105: No), the control device 50 drives the carbon dioxide supply device 10 again (Step S101).

As described above, executing the "spreading" in which carbon dioxide is spread without supply of carbon dioxide and ventilation in the house AH for the specified period of time of two minutes seemingly enabled efficient absorption of carbon dioxide ejected from the ejection outlet 21 into the leaves 92 and activation of photosynthesis of the strawberry plants 90.

The control device 50 alternately repeats the above-described "supplying" and "spreading" to continuously supply highly concentrated carbon dioxide to the leaves 92 of the strawberry plants 90. This enables to facilitate the growth of the strawberry plants 90.

Here, the temperature in the house AH shows tendency to increase due to the heat, generated when the carbon dioxide supply device 10 is driven, the greenhouse effect of ejected carbon dioxide, and so on. Excessive increase of the temperature T in the house AH causes so-called high temperature injury to the strawberry plants 90 and may hinder the growth. Accordingly, the control device 50 suitably ventilates the inside of the house AH to adjust the temperature inside the house AH. The following describes the temperature adjustment in the house AH executed by the control device 50.

In a case in which the temperature T in the house AH reaches T2 at time t3 that is when the control device 50 is in execution of the "supplying". Since the control device 50 does not make determination, during the execution of the "supplying", whether the temperature T in the house AH is T2 or more (Step S105), the control device 50 does not execute control based on such determination. That is, the control device 50 inhibits the ventilation fan 31 from being driven even when the temperature T in the house AH has reached T2 or more, nor does not ventilate the inside of the house AH.

When finishing execution of the "supplying" at time t4, the control device 50 subsequently initiates execution of the "spreading". Since the control device 50 does not make determination, also during the execution of the "spreading" from time t4 to time t5, whether the temperature T in the house AH has reached T2 or more (Step S105), the control device 50 obviously dose not execute the control based on such determination. That is, the control device 50 inhibits the ventilation fan 31 from being driven even when the temperature T in the house AH has reached T2 or more nor does not ventilate the inside of the house AH.

Subsequently, at time t5, that is time to finish executing the "spreading", the control device 50 determines whether the temperature T in the house AH has reached T2 or more (Step S105). At this point, it is determined that the temperature T in the house AH has reached T3, which is T2 or more (Step S105: Yes). If the execution of the "supplying" and the "spreading" is continued, the temperature T in the house AH may become excessively increased, the control device 50 drives the ventilation fan 31 (Step S106). Accordingly, the inside of the house AH is ventilated and the temperature T in the house AH is decreased.

The temperature sensor 40 measures the temperature T in the house AH even during the ventilation in the house AH and transmits the temperature T to the control device 50. The control device 50 determines whether the temperature T in the house AH during ventilation is at the threshold T1 or less (Step S107). At time t6, it is determined that the temperature T in the house AH is at the threshold T1 or less (Step S108: Yes), the control device 50 stops the ventilation fan 31 and finishes the ventilation in the house AH.

In a case in which the temperature T in the house AH does not reach T1 or less despite the ventilation fan 31 being driven for a specific period of time (for example, for 30 minutes), the control device 50 may alert, by an alarm (not shown), the operator of the house AH to the caused abnormality.

Moreover, in a case in which the temperature T in the house AH abnormally increases to T4 (not shown) or more, which is higher than T3, between time t4 and time t5, the control device 50, without waiting for time t5, may drive the ventilation fan 31 to decrease the temperature T in the house AH.

As described above, even if the temperature in the house AH reaches T2 or more while the "supplying" or the "spreading" is being executed, the growth of gardening plants can be facilitated by not subsequently executing ventilation until the time to finish the "spreading" since carbon dioxide supplied until the temperature T in the house AH reaches T2 is not discharged or wasted due to ventilation.

With reference to specific examples, the above has described the embodiment of the present invention. However, the present invention is not limited to these specific examples. That is, other examples in which suitable configuration changes are added to these specific examples by persons skilled in the art may be included within the scope of the present invention as long as the examples include the feature of the present invention.

For example, although inside the house AH is ventilated by the ventilation fan 31 in the aforementioned embodiment, the ventilation device is not limited to this. Alternatively, for example, ventilation may be performed through a ventilation window / ventilation windows that can be controlled to be open and close.

Moreover, in the above-described embodiment, the control device 50 controls the concentration of carbon dioxide at the position of the leaves 92 of the strawberry plants 90, without using a carbon dioxide concentration sensor, so that the concentration reaches an adequate and suitable value that is not excessively high. However, the present invention does not eliminate the usage of the concentration sensor for some other purposes. Installation of the concentration sensor inside the house AH can be allowed as a means, for example, to detect that the concentration of carbon dioxide inside the house AH is increasing to a degree to negatively affect the health of workers in the house AH.

### EXPLANATION OF REFERENCE NUMERALS

- 10: carbon dioxide supply device
- 20: tube
- 31: ventilation fan (ventilation device)
- 50: control device
- 90: strawberry (gardening plant)
- 91: foot
- AH: agricultural greenhouse
- CS: carbon dioxide application system

## Claims

1. A CARBON DIOXIDE application system that supplies carbon dioxide to gardening plants in an agricultural greenhouse, the system comprising:
a carbon dioxide supply device (10, 20) that supplies carbon dioxide;
a tube (20, 31) that is formed to extend from (4) the carbon dioxide supply device (10, 20) to a vicinity of a foot (91) of gardening plants and supplies carbon dioxide supplied from (4) the carbon dioxide supply device (10, 20) from (4) an ejection outlet (21) formed in a portion in the vicinity of the foot (91) of gardening plants;
a ventilation device that ventilates an inside of the agricultural greenhouse; and
a control device (50, 90) that controls the carbon dioxide supply device (10, 20) and the ventilation device, and, when temperature in the agricultural greenhouse reaches a specified value or more, drives the ventilation device, the carbon dioxide application system being **characterised in that** the control device (50, 90) alternately repeats execution of:
supplying in which the control device (50, 90) drives the carbon dioxide supply device (10, 20) for a first-period specified in advance during which the ventilation device is stopped;
and spreading in which, after the supplying being executed, the control device (50, 90) stops the carbon dioxide supply device (10, 20) and the ventilation device for a second-period specified in advance, and wherein, when the temperature in the agricultural greenhouse reaches a specified value or more while one of the supplying and the spreading being executed, the control device (50, 90) inhibits the ventilation device from (4) subsequently driving until end of execution of the spreading.

2. A METHOD for carbon dioxide application in which carbon dioxide is supplied to gardening plants in an agricultural greenhouse, the method comprising:
supplying in which carbon dioxide is supplied from (4) an ejection outlet (21) to a vicinity of a foot (91) of gardening plants for a first-period specified in advance, during which an inside of an agricultural greenhouse is not ventilated; and
spreading in which, after the supplying being executed, supplying of carbon dioxide and ventilation in the agricultural greenhouse are not performed for a second-period specified in advance, the supplying and the spreading being alternately performed, wherein, while one of the supplying and the spreading is being executed, if the temperature in the agricultural greenhouse reaches a specified value or more, the inside of the agricultural greenhouse is not subsequently ventilated until end of execution of the spreading.

## Patentansprüche

1. Kohlendioxidanwendungssystem, das Gartenpflanzen in einem landwirtschaftlichen Gewächshaus Kohlendioxid zuführt, wobei das System umfasst:
eine Kohlendioxid-Zuführeinrichtung (10, 20), die Kohlendioxid zuführt;
ein Rohr (20, 31), das ausgestaltet ist, sich von (4) der Kohlendioxid-Zuführeinrichtung (10, 20) zu einer Nähe eines Fußes (91) von Gartenpflanzen zu erstrecken, und Kohlendioxid zuführt, das von (4) der Kohlendioxid-Zuführeinrichtung (10, 20) von (4) einem Ausstoßauslass (21) zugeführt wird, der in einem Abschnitt in der Nähe des Fußes (91) von Gartenpflanzen ausgestaltet ist;
eine Belüftungseinrichtung, die ein Inneres des landwirtchaftlichen Gewächshauses belüftet; und
eine Steuereinrichtung (50, 90), die die Kohlendioxid-Zuführeinrichtung (10, 20) und die Belüftungseinrichtung steuert und, wenn die Temperatur in dem landwirtschaftlichen Gewächshaus einen bestimmten Wert oder mehr erreicht, die Belüftungseinrichtung antreibt, wobei das Kohlendioxidanwendungssystem **dadurch gekennzeichnet ist, dass** die Steuereinrichtung (50, 90) abwechselnd die Ausführung von Folgendem wiederholt:
Zuführen, wobei die Steuereinrichtung (50, 90) die Kohlendioxid-Zuführeinrichtung (10, 20) für eine erste vorbestimmte Zeitdauer antreibt, während dieser die Belüftungseinrichtung angehalten ist;
und Verteilen, wobei, nachdem das Zuführen ausgeführt wurde, die Steuereinrichtung (50, 90) die Kohlendioxid-Zuführeinrichtung (10, 20) und die Belüftungseinrichtung für eine zweite vorbestimmte Zeitdauer anhält, und wobei, wenn die Temperatur in dem landwirtschaftlichen Gewächshaus einen bestimmten Wert oder mehr erreicht, während eines von Zuführen und Verteilen ausgeführt wird, die Steuereinrichtung (50, 90) die Belüftungseinrichtung an (4) einem anschließenden Antreiben bis zum Ende der Ausführung des Verteilens hindert.

2. Verfahren zur Kohlendioxidanwendung, wobei Gartenpflanzen in einem landwirtschaftlichen Gewächshaus Kohlendioxid zugeführt wird, wobei das Verfahren umfasst:
Zuführen, wobei Kohlendioxid von (4) einem Ausstoßauslass (21) zu einer Nähe eines Fußes (91) von Gartenpflanzen für eine erste vorbestimmte Zeitdauer zugeführt wird, während dieser ein Inneres eines landwirtschaftlichen Gewächshauses nicht belüftet wird; und
Verteilen, wobei, nachdem das Zuführen ausgeführt wurde, das Zuführen von Kohlendioxid und die Belüftung in dem landwirtschaftlichen Gewächshaus für eine zweite vorbestimmte Zeitdauer nicht durchgeführt werden, wobei das Zuführen und das Verteilen abwechselnd durchgeführt werden, wobei, während eines von Zuführen und Verteilen ausgeführt wird, wenn die Temperatur in dem landwirtschaftlichen Gewächshaus einen bestimmten Wert oder mehr erreicht, das Innere des landwirtschaftlichen Gewächshauses anschließend bis zum Ende der Ausführung des Verteilens nicht belüftet wird.

## Revendications

1. Un système d'application de DIOXYDE DE CARBONE qui fournit du dioxyde de carbone à des plantes de jardin dans une serre agricole, le système comprenant :
un dispositif (10, 20) d'alimentation en dioxyde de carbone qui fournit du dioxyde de carbone ;
un tube (20, 31) qui est formé pour s'étendre depuis (4) le dispositif (10, 20) d'alimentation en dioxyde de carbone jusqu'à proximité d'un pied (91) des plantes de jardin et fournit du dioxyde de carbone fourni par (4) le dispositif (10, 20) d'alimentation en dioxyde de carbone depuis (4) une sortie d'éjection (21) formée dans une partie située à proximité du pied (91) de plantes de jardin ;
un dispositif de ventilation qui ventile l'intérieur de la serre agricole ; et
un dispositif de commande (50, 90) qui commande le dispositif (10, 20) d'alimentation en dioxyde de carbone et le dispositif de ventilation, et, lorsque la température dans la serre agricole atteint une valeur spécifiée ou plus, commande le dispositif de ventilation, le système d'application de dioxyde de carbone étant **caractérisé en ce que** le dispositif de commande (50, 90) répète en alternance l'exécution des opérations suivantes :
l'alimentation, dans laquelle le dispositif de commande (50, 90) commande le dispositif (10, 20) d'alimentation en dioxyde de carbone pendant une première période spécifiée à l'avance pendant laquelle le dispositif de ventilation est arrêté ;
et l'épandage, dans lequel, après l'exécution de l'alimentation, le dispositif de commande (50, 90) arrête le dispositif (10, 20) d'alimentation en dioxyde de carbone et le dispositif de ventilation pendant une deuxième période spécifiée à l'avance, et dans lequel, lorsque la température dans la serre agricole atteint une valeur spécifiée ou une valeur supérieure pendant l'accomplissement de l'un parmi l'alimentation et l'épandage, le dispositif de commande (50, 90) empêche l'entraînement ultérieur (4) du dispositif de ventilation, et ce jusqu'à la fin de l'exécution de l'épandage.

2. UN PROCÉDÉ d'application de dioxyde de carbone dans laquelle du dioxyde de carbone est fourni à des plantes de jardin dans une serre agricole, le procédé comprenant :
une alimentation, dans laquelle du dioxyde de carbone est alimenté à partir (4) d'une sortie d'éjection (21) à proximité d'un pied (91) de plantes de jardin pendant une première période spécifiée à l'avance, pendant laquelle l'intérieur d'une serre agricole n'est pas ventilé ; et
un épandage, dans lequel, après l'exécution de l'alimentation, l'alimentation en dioxyde de carbone et la ventilation dans la serre agricole ne sont pas effectués pendant une deuxième période spécifiée à l'avance, l'alimentation et l'épandage étant effectués en alternance, de sorte que, pendant que l'un parmi l'alimentation et l'épandage sont accomplis, si la température dans la serre agricole atteint une valeur spécifiée ou une valeur supérieure, l'intérieur de la serre agricole n'est pas ensuite ventilé jusqu'à la fin de l'exécution de l'épandage.
